Europäisches Patentamt

European Patent Office

Office européen des brevets

(19)

(11) Numéro de publication : **0 085 609**
**B1**

(12) FASCICULE DE BREVET EUROPÉEN

(45) Date de publication du fascicule du brevet :
08.07.87

(51) Int. Cl.⁴ : **B 25 J   3/00**

(21) Numéro de dépôt : 83400170.3

(22) Date de dépôt : 25.01.83

(54) **Télémanipulateur télescopique du type maître/esclave et ses moyens de tramsmission de mouvements par câbles ou rubans.**

(30) Priorité : 03.02.82 FR 8201712

(43) Date de publication de la demande :
10.08.83 Bulletin 83/32

(45) Mention de la délivrance du brevet :
08.07.87 Bulletin 87/28

(84) Etats contractants désignés :
**BE DE GB IT**

(56) Documents cités :
FR-A- 1 314 129
FR-A- 1 380 439
FR-A- 1 542 994
US-A- 3 481 493

(73) Titulaire : **COMMISSARIAT A L'ENERGIE ATOMIQUE**
**Etablissement de Caractère Scientifique Technique**
**et Industriel**
**31/33, rue de la Fédération**
**F-75015 Paris (FR)**

**LA CALHENE Société Anonyme**
**5, rue Emile Zola**
**F-95870 Bezons (FR)**

(72) Inventeur : **Glachet, Charles**
**42 rue du Maréchal de Rochambeau**
**F-41100 Vendome (FR)**
Inventeur : **Francois, Daniel**
**227 rue des Ruelles**
**F-41100 Vendome (FR)**
Inventeur : **Frioux, Christian**
**6 rue Charles Lindbergh**
**F-41100 Vendome (FR)**
Inventeur : **Tentelier, Jean**
**27 rue de Verdun La Ville aux Clercs**
**F-41160 Moree (FR)**

(74) Mandataire : **Mongrédien, André et al**
**c/o BREVATOME 25, rue de Ponthieu**
**F-75008 Paris (FR)**

## Description

La présente invention se rapporte à un télémanipulateur télescopique du type maître/esclave et concerne plus précisément, dans un tel manipulateur, les systèmes par câbles, par rubans ou par tout moyen analogue permettant de transmettre du côté esclave les mouvements effectués du côté maître du manipulateur. Dans l'ensemble du texte, on désignera par l'expression câbles ou rubans l'ensemble des moyens analogues permettant de remplir une telle fonction.

On sait que les manipulateurs du type maître/esclave se composent d'un bras maître équipé d'une poignée de commande accessible à un opérateur et d'un bras esclave généralement identique au bras maître et équipé d'un outil tel qu'une pince de préhension. Le bras esclave est disposé à l'intérieur d'une cellule non accessible à l'homme en raison de la présence d'une atmosphère ou de produits dangereux tels que des produits radioactifs à l'intérieur de cette cellule. Le bras maître et le bras esclave sont pourvus du même nombre de degrés de liberté et sont reliés mécaniquement au travers de la paroi de la cellule, de telle sorte que tout mouvement du bras maître et/ou de sa poignée de commande commandée par l'opérateur entraîne un mouvement identique du bras esclave et/ou de la pince de préhension. Un hublot ménagé dans la cloison de la cellule permet ainsi à l'opérateur d'effectuer à distance les manipulations souhaitées à l'intérieur de la cellule.

Les télémanipulateurs maître/esclave se subdivisent par ailleurs en deux grandes familles. La première de ces familles concerne les télémanipulateurs articulés dans lesquels les bras maître et esclave se composent chacun de plusieurs segments articulés qui reproduisent des mouvements comparables à ceux du bras humain, dans le cas le plus fréquent où ces segments sont au nombre de deux. La deuxième de ces familles, qui est celle à laquelle se rapporte la présente invention, concerne les télémanipulateurs télescopiques dans lesquels chaque bras se compose de plusieurs segments montés de façon télescopique afin de permettre une modification de la longueur de ces bras.

De façon plus précise, les télémanipulateurs télescopiques du type maître/esclave selon la présente invention se composent d'un bras maître et d'un bras esclave télescopiques, ces bras étant articulés sur un bloc de traversée autour de deux axes d'épaule normalement parallèles entre eux et orthogonaux à l'axe du bloc, le bloc de traversée traversant la cloison de la cellule et étant monté tournant autour de son axe propre. L'extrémité de chacun des bras dispose ainsi de trois degrés de liberté « de positionnement ».

De plus, chacun des bras porte à son extrémité une genouillère sur laquelle est montée la poignée de commande pour le bras maître et la pince de préhension pour le bras esclave. Chaque genouillère est montée tournante par rapport à l'axe du bras qui lui correspond et autorise en outre la rotation de la poignée et de la pince, d'une part, autour d'un axe orthogonal à l'axe du bras et, d'autre part, autour de son axe propre. Enfin, l'ouverture et la fermeture de la pince peuvent être commandées en manœuvrant une gâchette sur la poignée de commande. Ces degrés de liberté liés à la poignée et à la pince sont généralement appelés degrés de liberté « d'orientation ».

Par convention, on désignera dans la suite de la description les degrés de liberté de positionnement et d'orientation de la façon suivante :

X : rotation des bras autour de l'axe du bloc de traversée ;

Y : rotation des bras autour de leur axe d'épaule ;

Z : variation de la longueur des bras ;

A : pivotement de la genouillère autour de l'axe du bras ;

B : pivotement de la poignée et de la pince autour d'un axe orthogonal à l'axe du bras ;

C : pivotement de la poignée et de la pince autour de son axe propre ;

A ces degrés de liberté s'ajoute le mouvement d'ouverture et de fermeture de la pince, désigné par D.

Afin d'accroître la portée des télémanipulateurs et de faciliter l'accessibilité à certaines zones de la cellule, on équipe généralement ces télémanipulateurs de moyens permettant de réaliser un décalage du bras esclave par rapport au bras maître selon un ou plusieurs des degrés de liberté X, Y et Z, indépendamment de tout mouvement du bras maître. Compte tenu de la possibilité de décalage de la longueur du bras esclave par rapport à la longueur du bras maître, le bras esclave est généralement constitué de trois segments que l'on appellera respectivement segment supérieur, segment intermédiaire et segment inférieur, alors que le bras maître n'est constitué que de deux segments que l'on appellera segment supérieur et segment inférieur.

De façon connue, la transmission au bras esclave des mouvements en Z du bras maître, ainsi que la transmission à la pince de préhension de l'ensemble des mouvements A, B, C de la poignée de commande, y compris le mouvement D correspondant au serrage de la pince, sont réalisés le long de chacun des bras au moyen de câbles, de rubans ou de tout système analogue, au moins un câble ou un ruban étant prévu pour chacun de ces mouvements. Afin de préserver l'étanchéité de la traversée de la cloison de la cellule, la transmission des mouvements Y, Z, A, B, C et D au travers de cette cloison s'effectue par des arbres tournants parallèles à l'axe du bloc de traversée et s'étendant à l'intérieur de celui-ci au moins sur la largeur de la cloison. La transmission des mouvements entre ces arbres tournants et les câbles ou les rubans correspondants s'effectue, aussi bien du côté maître que du côté esclave, par exemple par l'intermédiaire de pignons de renvoi d'angles dont l'un est porté par l'arbre et dont l'autre est solidaire d'un cabestan sur lequel s'enroule le câble ou le ruban.

Du côté maître comme du côté esclave et pour chacun des câbles assurant la transmission à la pince de préhension des mouvements A, B, C et D impartis à la poignée de commande, il est nécessaire de prévoir des moyens permettant de compenser toute variation de longueur des câbles résultant des variations de longueur du bras correspondant. Ces variations peuvent être seulement manuelles pour le bras maître ou soit manuelles, soit électriques, pour le bras esclave. La même remarque s'applique au câble du bras esclave assurant la transmission à ce dernier des variations de l'allongement Z du bras maître, puisqu'il est nécessaire qu'un allongement du bras esclave commandé électriquement n'ait pas d'incidence sur ce mouvement.

Afin de résoudre ces problèmes de compensation, on a proposé dans un premier type de télémanipulateur télescopique (document US-A-3 481 493) de réaliser la compensation des variations de longueur manuelles du bras esclave en prévoyant sur chacun des câbles commandant les mouvements B, C, et D de la pince de préhension un système de mouflage interne au bras. Dans ce même télémanipulateur télescopique, la compensation des variations de longueur électriques du bras esclave est réalisée séparément au moyen d'un chariot mobile externe au bras esclave et sur lequel passent les câbles commandant les mouvements A, B, C et D de la pince et le câble commandant l'allongement manuel Z du bras esclave. Bien entendu, du côté du bras maître, on ne trouve que le système de mouflage interne au bras pour compenser les variations de longueur de celui-ci. Cette disposition conduit donc à utiliser deux moyens différents (moufles et chariot) pour réaliser la compensation des variations de longueur du bras esclave, selon l'origine de la commande (manuelle et électrique). En conséquence, elle présente l'inconvénient de poser un problème important d'encombrement notamment au niveau du bras esclave, par suite de la présence de moufles à l'intérieur de ce bras, ainsi qu'un problème de câblage par suite de la complexité du système entraînant des frottements importants. Cet inconvénient est d'autant plus grave qu'il tend à réduire la durée de vie des câbles ou courroies, avec les conséquences que cela implique au niveau du rendement d'un tel manipulateur, par suite de la complexité des interventions au niveau du bras esclave.

On connaît aussi des télémanipulateurs télescopiques connus du demandeur (pas de document) dans lesquels ces problèmes sont résolus de façon assez différente. Ces télémanipulateurs se caractérisent notamment par le fait que les commandes de l'allongement du bras esclave sont réalisées au moyen d'un système de câblage unique pour la commande manuelle et pour la commande de décalage électrique. Cette caractéristique a pour conséquence qu'il n'est plus nécessaire de prévoir de compensation sur les câbles assurant la commande des différents mouvements de la pince de préhension. En effet, le segment intermédiaire du bras esclave se déplace alors sur une distance égale à la moitié de la distance sur laquelle se déplace le segment inférieur, de sorte que le cheminement des câbles entre le segment intermédiaire et le segment supérieur permet d'assurer automatiquement cette compensation. Toutefois, ce système présente l'inconvénient que chaque mouvement d'extension du bras esclave, qu'il soit manuel ou électrique, entraîne un double frottement entre les différents segments du bras esclave, ce qui n'est pas souhaitable pour des raisons mécaniques évidentes.

La présente invention a précisément pour objet un télémanipulateur télescopique équipé d'un système de câblage différent des systèmes connus et ne présentant pas les inconvénients de ces systèmes. De façon plus précise, l'invention a pour objet de prévoir un télémanipulateur télescopique équipé d'un système de câblage simplifié dans lequel la compensation des variations de longueur du bras esclave est réalisée par un moyen unique, quelle que soit l'origine de ces variations (commande électrique ou manuelle), et dans lequel les frottements sont réduits aussi bien sur les câbles que sur les différents segments du bras esclave.

A cet effet, il est proposé un télémanipulateur télescopique du type selon le préambule de la revendication 1 (basé sur le brevet US-A-3 481 493) et comprenant un bloc de traversée de cloison monté tournant autour de son axe propre, un bras maître télescopique constitué d'un segment supérieur et d'un segment inférieur et un bras esclave télescopique constitué d'un segment supérieur, d'un segment intermédiaire et d'un segment inférieur, ces bras étant articulés par leurs segments supérieurs sur le bloc de traversée autour de deux axes d'épaule orthogonaux à l'axe du bloc, une poignée de commande comportant un organe de commande de serrage et montée tournante à l'extrémité libre du bras maître selon trois mouvements d'orientation orthogonaux A, B, C, un organe de préhension comportant des moyens de serrage et monté tournant à l'extrémité libre du bras esclave, selon trois mouvements d'orientation orthogonaux correspondant aux mouvements de la poignée, des premiers moyens de transmission mécaniques au bras esclave des mouvements de positionnement X, Y, Z impartis au bras maître, des deuxièmes moyens de transmission mécaniques à l'organe de préhension des mouvements d'orientation A, B, C de la poignée et d'un mouvement D de l'organe de commande de serrage, et des moyens de décalage du bras esclave par rapport au bras maître, permettant de modifier la longueur Z et l'orientation X, Y du bras esclave autour de son axe d'épaule et autour de l'axe du bloc de traversée sans modifier les coordonnées correspondantes du bras maître, les deuxièmes moyens de transmission comprenant, pour chaque mouvement A, B, C, D transmis par ces deuxièmes moyens, au moins un premier câble ou ruban associé au bras maître pour transmettre le mouvement correspondant de la poignée de commande à un arbre tournant logé dans le bloc de traversée et au moins un deuxième câble ou ruban associé au bras esclave pour transmettre le mouvement correspondant de l'arbre tournant à l'organe de préhension, tous les deuxièmes câbles ou rubans associés au bras esclave passant d'abord sur des poulies situées à proximité de l'axe d'épaule du bras esclave, sur des poulies portées par un chariot mobile unique externe au bras esclave, puis sur des poulies montées à l'extrémité supérieure du segment supérieur du bras esclave, des moyens étant prévus pour commander un déplacement du chariot le long du bras esclave lorsqu'une variation de longueur de ce dernier résultant d'un actionnement des moyens de décalage se produit, ce déplacement s'effectuant dans le sens opposé et sur une distance égale à la moitié de cette variation de longueur, caractérisé en ce que les deuxièmes câbles ou rubans associés aux mouvements d'orientation B et C et de serrage D de l'organe de préhension passent ensuite sur des poulies de commande desdits mouvements B, C, D transmis par les deuxièmes moyens de transmission, ces dernières poulies étant montées à l'extrémité inférieure du segment inférieur du bras esclave, et en ce que lesdits moyens pour commander le déplacement du chariot le long du bras esclave assurent de plus ce déplacement lorsque la variation de longueur du bras esclave résulte d'un actionnement des premiers moyens de transmission, de sorte que le chariot unique permet de compenser les variations de longueur des câbles ou rubans résultant des variations de longueur du bras esclave, aussi bien sous l'effet des moyens de décalage que sous l'effet des premiers moyens de transmission.

Grâce à ces caractéristiques, le câblage du bras esclave est particulièrement simple et tout mouflage interne au bras est supprimé. De plus, l'extension manuelle du bras esclave fait seulement intervenir un déplacement du segment inférieur de ce bras, de sorte que le frottement est minimum de ce point de vue et que la commande manuelle de cette extension s'en trouve facilitée.

De préférence, les deuxièmes câbles ou rubans associés au mouvement d'orientation A de l'organe de préhension passent ensuite sur un cabestan de commande de ce mouvement A, ce cabestan étant monté sur une pièce immobilisée en rotation à l'intérieur du segment intermédiaire du bras esclave, cette pièce supportant de façon tournante l'extrémité supérieure du segment inférieur du bras esclave, un pignon solidaire du cabestan étant engréné dans une denture formée à l'extrémité supérieure du segment inférieur du bras esclave.

Conformément à un mode de réalisation préféré de l'invention, les moyens pour déplacer le chariot comprennent un câble ou ruban antagoniste dont les extrémités sont fixées respectivement à l'extrémité inférieure du segment supérieur et à l'extrémité supérieure du segment inférieur du bras esclave, et qui passe successivement sur des poulies montées respectivement sur le chariot, à l'extrémité inférieure du segment supérieur, à l'extrémité supérieure du segment intermédiaire et à l'extrémité inférieure du segment intermédiaire.

Selon un autre développement du manipulateur selon l'invention, tous les premiers câbles ou rubans associés au bras maître passent sur des poulies portées par un deuxième chariot mobile unique externe au bras maître, puis sur des poulies montées sur le bras maître à proximité de son axe d'épaule, pour être commandés directement par la poignée de commande ou par le segment inférieur du bras maître, et des moyens sont prévus pour déplacer le deuxième chariot le long du bras maître lorsqu'une variation de longueur de ce dernier se produit, dans le sens opposé et sur une distance égale à la moitié de cette variation de longueur.

De préférence, les moyens pour déplacer le deuxième chariot comprennent un deuxième câble ou ruban antagoniste dont les extrémités sont fixées respectivement à la partie inférieure du segment supérieur et à l'extrémité supérieure du segment inférieur du bras maître, et qui passe successivement sur des poulies montées respectivement sur le deuxième chariot et à l'extrémité inférieure du segment supérieur du bras maître.

Selon encore un autre développement du manipulateur selon l'invention, les moyens de transmission au bras esclave des variations de longueur du bras maître comprennent au moins un troisième câble ou ruban associé au bras maître pour transmettre le mouvement du segment inférieur du bras maître à un autre arbre tournant logé dans le bloc de traversée et au moins un quatrième câble ou ruban associé au bras esclave pour transmettre le mouvement correspondant de cet arbre tournant au segment inférieur du bras esclave, ce quatrième câble ou ruban passant sur au moins une poulie portée par un troisième chariot mobile externe au bras esclave, puis sur au moins une poulie montée sur le bras esclave à proximité de son axe d'épaule, pour commander directement le déplacement du segment inférieur par rapport aux autres segments du bras esclave, des moyens étant prévus pour déplacer le troisième chariot le long du bras esclave lorsqu'une variation de longueur de ce dernier se produit au travers des moyens de transmission, dans le sens opposé et sur une distance égale à la moitié de cette variation de longueur.

De préférence, les moyens pour déplacer ce troisième chariot comprennent un troisième câble ou ruban antagoniste dont les extrémités sont fixées respectivement à la partie inférieure du segment supérieur et à l'extrémité supérieure du segment intermédiaire du bras esclave, et qui passe successivement sur une poulie portée par le troisième chariot et sur une poulie portée à l'extrémité inférieure du segment supérieur du bras esclave.

Afin d'acroître la longueur des segments constituant les bras, chacun des câbles ou rubans des moyens de transmission passe de préférence auprès de l'axe d'épaule du bras correspondant sur au moins une poulie portée par le segment supérieur de ce bras et située au-dessus de l'axe d'épaule sur le bras esclave comme sur le bras maître. L'augmentation de la longueur des segments qui en résulte a pour conséquence d'améliorer le rapport entre la longueur des bras étendus et celle des bras rétractés. Cette caractéristique permet en outre d'améliorer le débattement en Y des bras et d'équilibrer la variation de longueur du câblage au cours d'un mouvement d'épaule.

On décrira maintenant, à titre d'exemple non limitatif, un mode de réalisation préféré de l'invention en se référant aux dessins annexés dans lesquels :

la figure 1 est une vue de côté, en coupe partielle, montrant de façon schématique un manipulateur télescopique du type maître/esclave réalisé conformément à la présente invention,

la figure 2 est une vue en coupe schématique montrant, à plus grande échelle que la figure 1, les moyens permettant de commander, à partir de la poignée de commande, le mouvement D de serrage de la pince de préhension du manipulateur ;

la figure 3 est une vue comparable à la figure 2 montrant les moyens permettant de transmettre à la pince de préhension l'un quelconque des mouvements B et C de la poignée de commande ;

la figure 4 est une vue comparable aux figures 2 et 3 montrant les moyens permettant de transmettre au segment inférieur du bras esclave le mouvement de rotation A du segment inférieur du bras maître autour de son axe propre ;

la figure 5 est une vue en coupe à plus grande échelle montrant une partie du bras esclave et, notamment, les moyens permettant de faire tourner le segment inférieur de ce dernier lors de la mise en œuvre des moyens de transmission représentés sur la figure 4 ;

la figure 6 est une vue comparable aux figures 2, 3 et 4 montrant les moyens permettant de transmettre au bras esclave les mouvements d'extension manuel du bras maître ;

la figure 7 est une vue en coupe à plus grande échelle d'une partie du bloc de traversée et de la partie supérieure du bras esclave montrant les moyens permettant de commander l'extension du bras esclave sous l'action des moyens de décalage électrique ; et

les figures 8a et 8b sont des vues en coupe schématique, à plus grande échelle, montrant dans deux positions extrêmes l'articulation d'épaule du bras esclave sur le bloc de traversée et la disposition des poulies de guidage des câbles de commande du bras par rapport à cet axe.

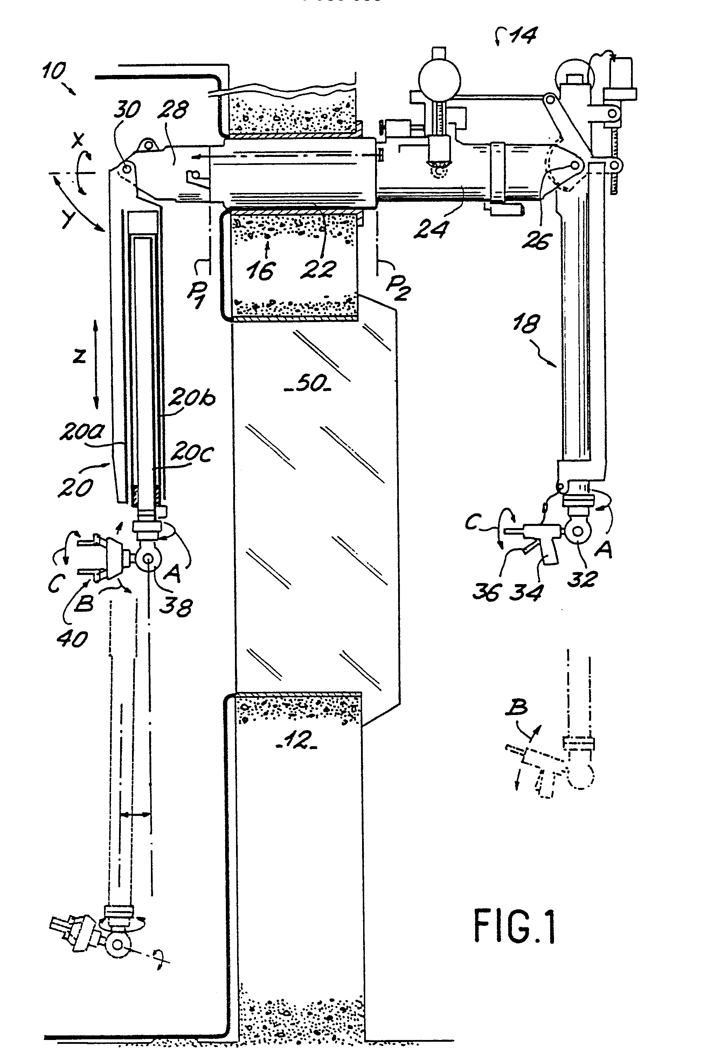

On a représenté sur la figure 1 une cloison verticale 12 d'une cellule 10 contenant une atmosphère ou des produits devant être isolés par suite de leur caractère dangereux ou de la nécessité de les protéger de l'environnement. La cellule 10 peut notamment contenir des produits radioactifs.

Lorsque des manutentions doivent être effectuées dans une telle cellule, elles doivent être commandées à distance de l'extérieur et l'on utilise à cet effet des télémanipulateurs. De préférence, un hublot 50 est prévu dans la cloison 12 afin d'autoriser une observation directe de la manipulation effectuée par l'opérateur. Dans certaines conditions, le hublot 50 pourrait toutefois être supprimé et remplacé par un ensemble électronique comprenant une ou plusieurs caméras de télévision placée(s) à l'intérieur de la cellule et reliée(s) à des écrans placés à l'extérieur.

Conformément à l'invention, on utilise un télémanipulateur télescopique 14, du type maître/esclave qui comprend un bloc de traversée 16 traversant la cloison 12 et aux extrémités duquel sont articulés, à l'extérieur de la cellule 10, un bras maître télescopique 18 et, à l'intérieur de la cellule 10, un bras esclave télescopique 20.

De façon plus précise, le bloc de traversée 16 comprend une partie cylindrique 22 montée de façon tournante dans la cloison 12 autour de son axe horizontal, une partie en porte-à-faux 24 située à l'extérieur de la cellule 10 et supportant le bras maître 18 de façon tournante autour d'un axe d'épaule 26 orthogonal à l'axe de la partie 22, et une partie en porte-à-faux 28 située à l'intérieur de la cellule 10 et supportant le bras esclave 20 par l'intermédiaire d'un axe d'épaule 30 également orthogonal à l'axe horizontal de la partie 22.

L'axe d'épaule 30 est normalement parallèle à l'axe d'épaule 26 lorsqu'aucun décalage en X n'existe entre le bras esclave et le bras maître. Les parties 24 et 28 du bloc de traversée 16 sont normalement solidaires de la partie 22, mais elles peuvent être désolidarisées au niveau des plans de décrabotage représentés schématiquement en $P_1$ et $P_2$ sur la figure 1, à l'aide de moyens de décrabotage commandés de l'extérieur de la cellule 10 et bien connus des spécialistes de la technique. Ces moyens de décrabotage ne faisant pas partie de la présente invention ne seront pas décrits ici plus en détail. On notera simplement qu'ils permettent de changer à volonté le bras maître et le bras esclave sans affecter l'étanchéité de la cellule.

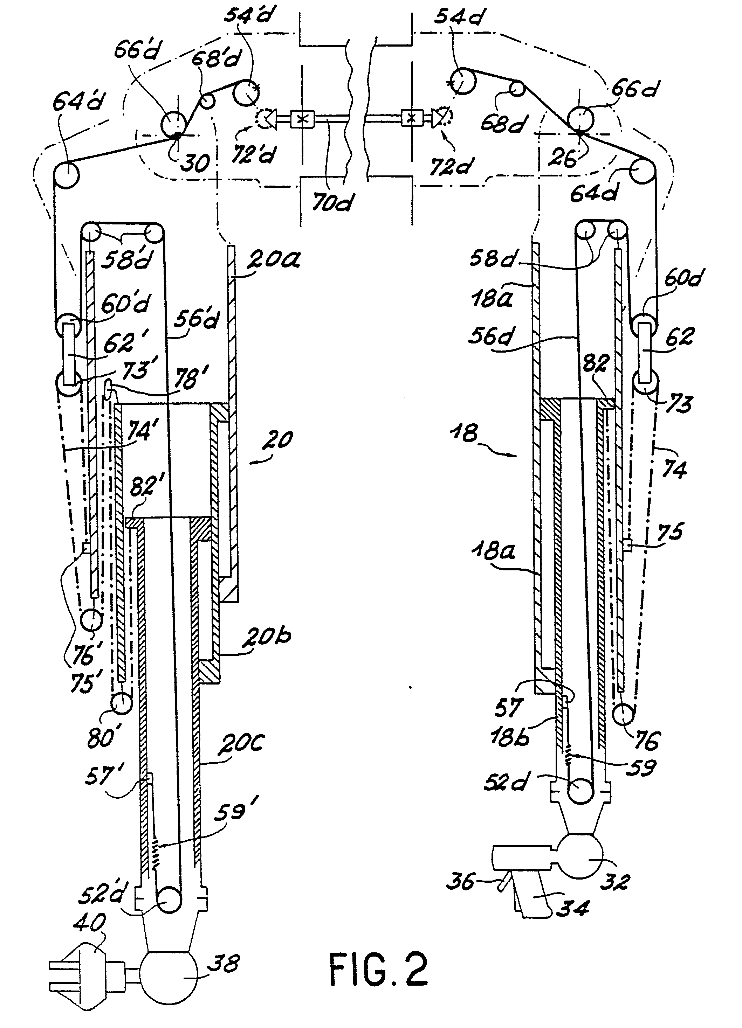

De façon également connue, chacun des bras 18 et 20 se compose de plusieurs segments télescopiques permettant d'en modifier la longueur. Ces segments sont généralement au nombre de deux pour le bras maître 18 et au nombre de trois pour le bras esclave 20. Ainsi, on voit notamment sur la figure 2 que le bras maître 18 se compose d'un segment supérieur 18a par lequel il est articulé sur l'axe d'épaule 26 et d'un segment inférieur 18b portant la poignée de commande 34. De même, on voit que le bras esclave 20 comprend un segment supérieur 20a par lequel il est articulé sur l'axe d'épaule 30, un segment intermédiaire 20b servant à modifier la longueur du bras esclave lorsqu'un décalage électrique est commandé et un segment inférieur 20c portant la pince de préhension 40 et servant à modifier manuellement l'allongement du bras esclave.

La partie inférieure 18b du bras maître porte à son extrémité inférieure une genouillère 32 supportant elle-même la poignée de commande 34. La genouillère 32 est montée de façon tournante autour de l'axe du bras 18, comme l'indique la flèche A sur la figure 1. De plus, la genouillère 32 est conçue d'une part, de façon à permettre une orientation de la poignée 34 autour d'un axe orthogonal à l'axe du bras 18, comme l'indique la flèche B et, d'autre part, de façon à autoriser une rotation de la poignée 34 autour de son axe propre, comme l'indique la flèche C. La poignée 34 dispose en outre d'une gâchette 36 permettant de commander l'ouverture et la fermeture de la pince de préhension 40 montée à l'extrémité inférieure de la partie 20c du bras esclave, par l'intermédiaire d'une genouillère 38.

De la même façon que la genouillère 32, la genouillère 38 peut tourner autour de l'axe du bras 20, comme l'indique la flèche A, et autorise des mouvements de la pince 40 selon les directions B et C identiques à celles qui ont été définies pour la poignée 34 par rapport à la genouillère 32.

La description qui précède fait apparaître que chacun des bras du télémanipulateur 14 définit trois degrés de liberté de positionnement X, Y et Z déterminant la position de l'extrémité de chacun des bras dans l'espace, trois degrés de liberté d'orientation A, B, C déterminant l'orientation de la poignée et de la pince par rapport à cette position et un mouvement D d'ouverture et de fermeture de la pince.

Pour remplir la fonction qui lui est impartie, le télémanipulateur 14 doit être conçu de telle sorte qu'à tout mouvement du bras maître 18 et/ou de la poignée de commande 34 corresponde un mouvement identique ou semblable du bras esclave 20 et/ou de la pince 40. A cet effet, on utilise des moyens de transmission qui permettent de relier mécaniquement, au travers du bloc de traversée 16, le bras maître 18 au bras esclave 20 et la poignée 34 à la pince de préhension 40.

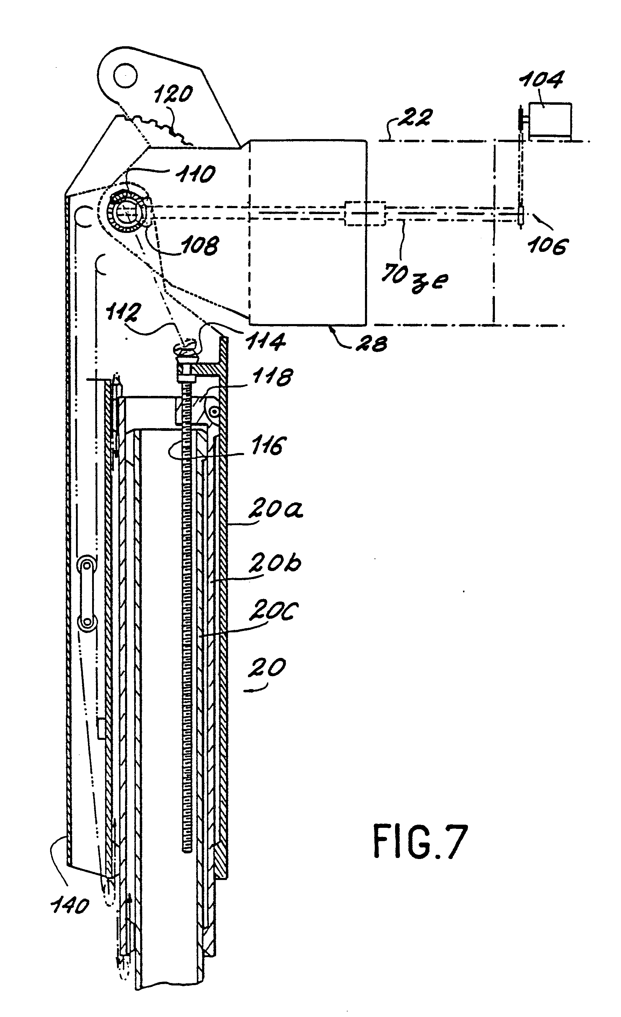

De façon plus précise, la transmission du mouvement de rotation X s'effectue directement en faisant tourner l'ensemble constitué par les deux bras 18 et 20 et par le bloc de traversée 16 autour de l'axe horizontal de ce dernier. La transmission des mouvements de rotation Y des bras autour de leurs axes d'épaule peut être réalisée au moyen d'un arbre tournant logé dans le bloc 22 et venant s'engréner par l'intermédiaire de pignons sur des secteurs dentés tels que 120 (figure 7) solidaires de l'extrémité supérieure de chacun des bras et centrés sur l'axe d'épaule correspondant.

Enfin, à chacun des degrés de liberté Z, A, B, C et D définis précédemment correspond un moyen de transmission de mouvement qui se compose, d'une part, à l'intérieur de chacun des bras 18 et 20, d'une commande par câble ou ruban et, d'autre part, à l'intérieur du bloc de traversée 16, d'arbres tournants disposés horizontalement et dont la rotation assure la transmission mécanique au câble ou au ruban du bras esclave 20 des mouvements impartis au câble ou ruban correspondant du bras maître 18. Cette solution permet notamment d'assurer une bonne étanchéité au niveau de la partie 22 du bloc de traversée 16 et facilite le décrabotage des parties 24 et 28. En effet, ce décrabotage s'effectue sur les arbres tournants qui sont réalisés en trois parties démontables comme le bloc de traversée.

Compte tenu des possibilités d'extension manuelle $Z_m$ du bras maître et du bras esclave et des possibilités d'extension par décalage électrique $Z_e$ du bras esclave, on comprend que des moyens de compensation doivent être prévus afin que ces variations de longueur n'aient pas d'incidence sur la commande des autres mouvements, et notamment sur les commandes par câbles associées à chacun des bras 18 et 20.

Par convention, on désignera dans la suite de la description chacun des éléments spécifiques de l'un quelconque des mouvements A, B, C, D et Z par un chiffre de référence suivi de la lettre a, b, c, d et z respectivement, ce chiffre étant en outre affecté de l'indice prime lorsque l'élément correspondant se trouve du côté esclave du manipulateur.

On décrira maintenant, en se référant à la figure 2, les moyens permettant de commander le serrage D de la pince 40 en agissant sur la gachette 36 de la poignée de commande 34. Ces moyens de commande comprennent une poulie d'entraînement 52d montée dans le bras maître 18, à l'extrémité inférieure du segment inférieur 18b. Des moyens de transmission d'un type connu (non représentés) permettent de faire tourner la poulie 52d lorsqu'on actionne la gachette 36. La rotation de la poulie 52d est transmise par un câble 56d à un cabestan 54d monté dans la partie 24 du bloc de traversée 16. Ce câble 56d est fixé en 57 dans le segment 18b, légèrement au-dessus de la poulie 52d, par l'intermédiaire d'un ressort de tension 59. Il s'enroule ensuite sur la poulie 52d et monte à l'intérieur du bras 18 jusqu'à l'extrémité supérieure du segment 18a où il passe sur deux poulies 58d, avant de redescendre à l'extérieur du bras et de passer sur une poulie 60d portée par un chariot mobile 62 extérieur au segment supérieur 18a du bras maître. Le câble 56d remonte ensuite jusqu'à l'extrémité supérieure du bras, où il passe successivement sur une poulie 64d, sous une poulie 66d et sur une poulie de renvoi 68d, avant de s'enrouler sur le cabestan 54d. Comme on le verra ultérieurement, la poulie 66d est disposée au-dessus de l'axe d'épaule 26 du bras maître, de telle sorte que le câble 56d passe à proximité immédiate de cet axe. On verra également par la suite que le chariot 62 se déplace automatiquement lorsque l'allongement du bras maître se modifie, de façon que cette modification n'ait aucune incidence sur l'enroulement du câble 56d sur la poulie 52d et sur le cabestan 54d.

Comme on l'a mentionné précédemment, la transmission de chacun des mouvements au travers de la partie centrale 22 du bloc de traversée 16 s'effectue par un arbre tournant disposé horizontalement à l'intérieur de cette partie du bloc. Dans le cas du mouvement D de serrage de la pince, dont les moyens permettent d'en transmettre la commande sont représentés sur la figure 2, l'arbre de commande correspondant est désigné par la référence 70d. La transmission à cet arbre du mouvement de rotation du cabestan 54d est réalisée au moyen de pignons à renvoi d'angle 72d dont l'un est solidaire du cabestan et dont l'autre est solidaire de l'arbre.

Une configuration pratiquement symétrique se retrouve du côté du bras esclave 20, de sorte que les mêmes références numériques affectées de l'indice prime sont utilisées pour désigner les éléments correspondant à ceux du bras maître. Ainsi, on voit sur la figure 2 que le mouvement de rotation de l'arbre 70d est transmis à un cabestan 54'd par des pignons à renvoi d'angle 72'd montés dans la partie 28 du bloc de traversée. La transmission à la pince du mouvement du cabestan 54'd est réalisée au moyen d'un câble 56'd dont une extrémité s'enroule sur le cabestan 54'd et dont l'autre extrémité s'enroule sur une poulie 52'd montée dans le bras esclave 20, à l'extrémité inférieure du segment inférieur 20c avant de s'accrocher en 57' à l'intérieur de ce dernier, par l'intermédiaire d'un ressort de tension 59'. A partir du cabestan 54'd, le câble 56'd passe successivement au-dessus d'une poulie de renvoi 68'd, en dessous d'une poulie 66'd, et au-dessus d'une poulie 64'd, ces trois poulies étant placées à proximité de l'axe d'épaule 30 du bras esclave. Le câble 56'd descend ensuite le long du bras pour venir s'enrouler sur une poulie 60'd portée par un chariot mobile 62' monté à l'extérieur du segment 20a du bras esclave. Le câble 56'd remonte ensuite jusqu'à deux poulies 58'd montées à l'extrémité supérieure du segment supérieur 20a, avant de redescendre à l'intérieur du bras esclave jusqu'à la poulie 52'd. Comme la poulie 66d, la poulie 66'd est disposée au-dessus de l'axe d'épaule 30, de telle façon que le câble 56'd passe toujours à proximité immédiate de cet axe. De même, le chariot 62' est mobile de façon à compenser toute variation de longueur du bras esclave résultant, soit d'une variation de longueur du bras maître, soit d'une commande électrique d'un décalage du bras esclave par rapport au bras maître. En d'autres termes, le chariot 62' permet d'empêcher toute répercussion d'une telle variation de longueur du bras esclave sur le câble 56'd au niveau du cabestan 54'd et de la poulie 52'd. La tension du câble 56'd est réalisée de préférence à l'aide de la poulie 60'd.

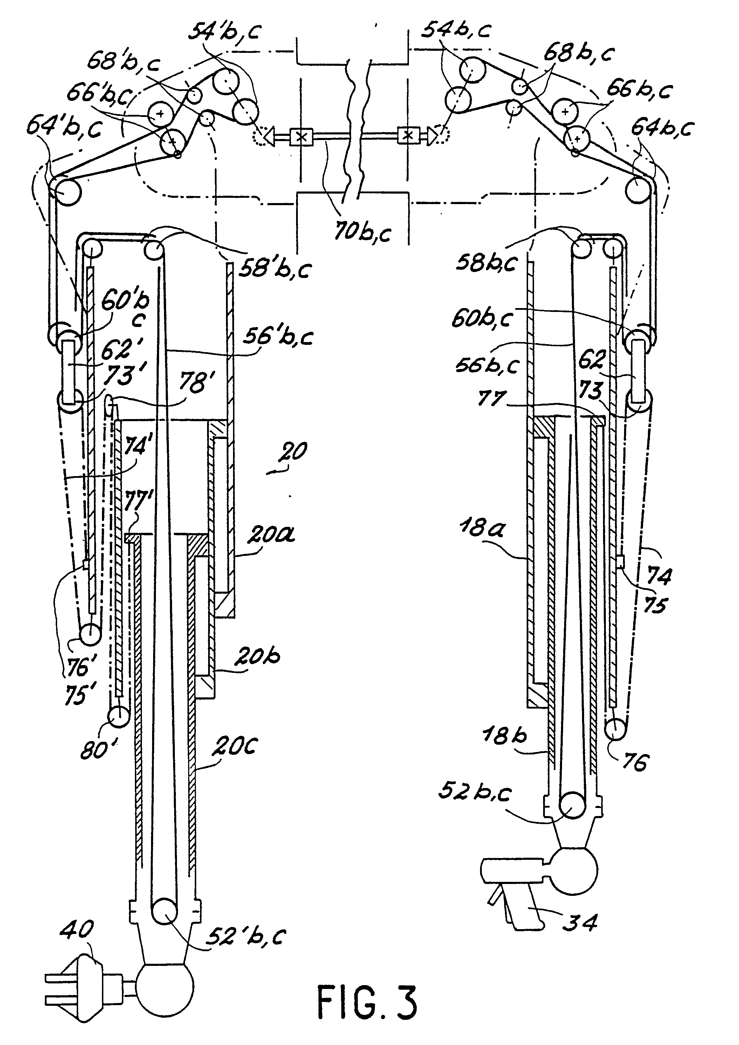

On a représenté sur la figure 3 les moyens permettant de transmettre à la pince de préhension 40 l'un quelconque des mouvements B ou C de la poignée de préhension 34. Il faut noter dès à présent que des moyens de transmission identiques sont prévus pour chacun de ces mouvements. Comme le montre la figure 3, ces moyens de transmission sont du même type que ceux qui ont été décrits en se référant à la figure 2 pour transmettre le mouvement de serrage de la pince. Ils ne seront donc pas décrits plus en détail et on notera simplement ici que les éléments correspondants à ceux de la figure 2 ont été désignés sur la figure 3 par les mêmes références numériques affectées des indices b ou c, selon qu'ils correspondent à la transmission des mouvements B ou C.

Par rapport aux moyens de transmission qui ont été décrits en se référant à la figure 2, les moyens assurant la transmission de chacun des mouvements B et C, diffèrent cependant par les caractéristiques suivantes :

Les câbles 56b, c et 56'b, c sont doublés ainsi que les poulies 58b, c ; 60b, c ; 64b, c ; 66b, c ; 68b, c sur lesquelles ils s'enroulent. Il en résulte que les extrémités des câbles 56b, c et 56'b, c s'enroulent respectivement sur deux cabestans 54b, c et 54'b, c montés dans le bloc de traversée. Comme les poulies 60d et 60'd pour les câbles 56d et 56'd, les poulies 60b, 60c et 60'b, 60'c assurent respectivement la tension des câbles 56b, 56c et 56'b, 56'c.

Conformément à l'invention, toutes les poulies 60b, 60c et 60d sur lesquelles s'enroulent les câbles 56b, 56c et 56d commandant les mouvements B, C et D sont montés sur le même chariot 62, qui se déplace à l'extérieur du bras maître 18 pour compenser les variations de longueur de celui-ci. A cet effet, le déplacement du chariot 62 doit se faire dans le sens opposé à la variation de longueur du bras maître et sur une distance égale à la moitié de cette variation de longueur. Ainsi, si l'on déplace manuellement le segment 18b vers le bas sur une distance $Z_m$, le chariot 62 doit se déplacer vers le haut sur une distance $Z_m/2$. A cet effet, comme le montrent les figures 2 et 3, le chariot 62 est équipé à son extrémité inférieure d'une autre poulie 73 sur laquelle vient s'enrouler un câble antagoniste 74 dont une extrémité 75 est fixée sur le segment supérieur 18a du bras maître vers la partie inférieure de ce segment et qui passe successivement sur la poulie 73 et sur une poulie 76 montée à l'extrémité inférieure du segment 18a, avant de venir s'accrocher par son extrémité opposée 77 à l'extrémité supérieure du segment inférieur 18b. L'extrémité 75 sert à assurer la tension du câble 74.

De façon comparable et toujours conformément à l'invention, toutes les poulies 60'b, 60'c et 60'd permettant de compenser sur les câbles 56'b, 56'c et 56'd les variations de longueur du bras esclave 20 sont portées par le même chariot 62'. Ce chariot 62' est monté à l'extérieur du bras esclave de façon à se déplacer en sens opposé lorsqu'une variation de longueur de ce bras se produit, et sur une distance égale à la moitié de cette variation de longueur. De façon plus précise, lorsqu'un allongement manuel $Z_m$ et/ou électrique $Z_e$ du bras esclave se produit, le chariot 62' se déplace vers le haut sur une distance égale à la moitié $Z_m + Z_e/2$ de cet allongement. Comme le montrent les figures 2 et 3, ce résultat est également obtenu au moyen d'un câble antagoniste 74' dont une première extrémité 75' est fixée à la partie inférieure du segment supérieur 20a du bras esclave, et qui s'enroule successivement sur une poulie 73' montée à l'extrémité inférieure du chariot 62', sur une poulie 76' montée à l'extrémité inférieure du segment 20a, sur une poulie 78' montée à l'extrémité supérieure du segment intermédiaire 20b et sur une poulie 80' montée à l'extrémité inférieure de ce même segment, avant d'être fixé par son autre extrémité 77' à l'extrémité supérieure du segment inférieur 20c. Le point de fixation 75' du câble antagoniste 74' sert à assurer la tension de ce dernier.

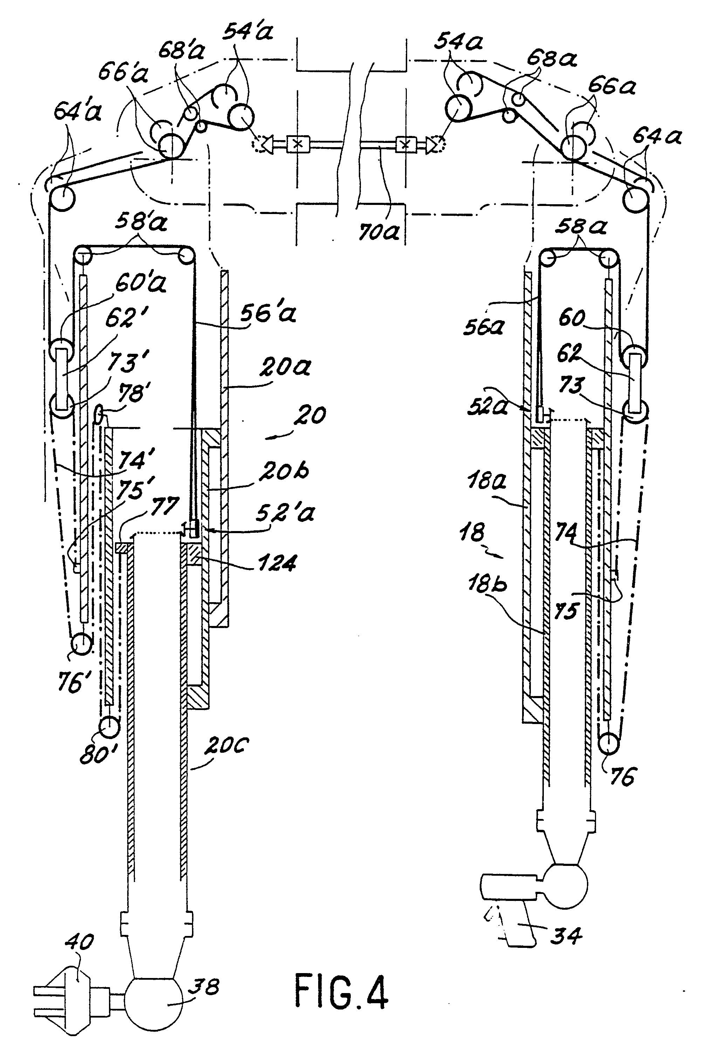

On a représenté sur la figure 4 les moyens permettant de transmettre au segment inférieur 20c du bras esclave le mouvement A de rotation autour de son axe du segment inférieur 18b du bras maître.

Ces moyens de transmission sont pratiquement identiques aux moyens de transmission des mouvements B et C décrits précédemment en se référant à la figure 3, à l'exception des poulies d'entraînement 52b, c et 52'b, c qui sont remplacés par des moyens d'entraînement plus complexes 52a et 52'a. En conséquence, les différents éléments constituant les moyens de transmission du mouvement A ont été désignés sur la figure 4 par les mêmes chiffres de référence que les éléments correspondants représentés sur la figure 3, et ils ne seront pas décrits à nouveau.

Conformément à l'invention, on remarquera simplement de ce point de vue que les câbles 56a et 56'a passent sur des poulies 60a et 60'a qui sont portées par les mêmes chariots 62 et 62' que les poulies 60b, c, d et 60'b, c, d sur lesquelles passent les câbles 56b, c, d et 56'b, c, d.

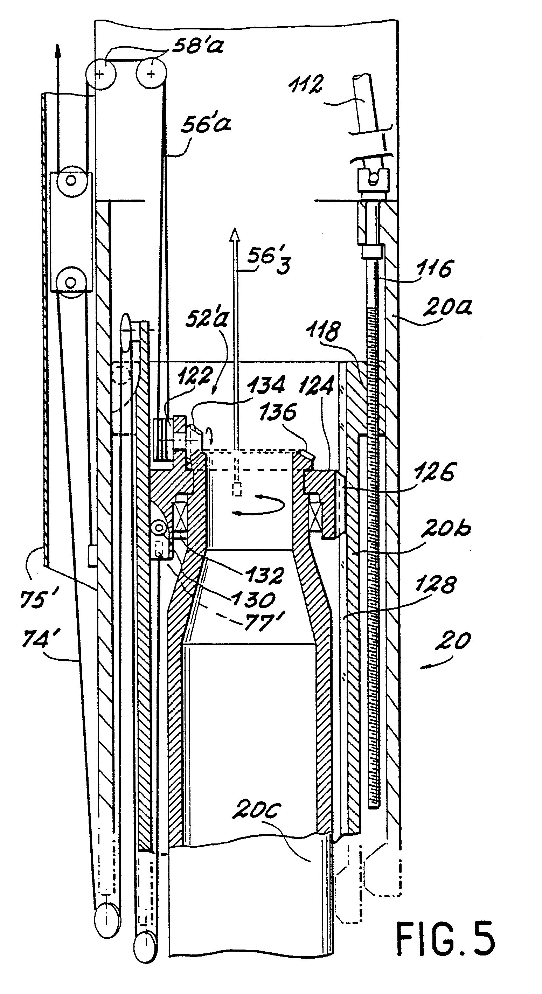

En ce qui concerne les moyens d'entraînement 52a et 52'a, ils sont identiques et on décrira seulement plus en détails le moyen d'entraînement 52'a en se référant à la figure 5. Comme le montre cette figure, le câble 56'a descend à l'intérieur du bras esclave 20 à partir des poulies 58'a, pour venir s'enrouler sur un cabestan d'entraînement 122 dont l'axe est porté par une pièce 124 montée de façon coulissante à l'intérieur du segment intermédiaire 20b du bras esclave. La pièce 124 est immobilisée en rotation à l'intérieur du segment 20b par une rainure de clavette 126 dans laquelle vient se loger une clavette 128 ou tout autre moyen donnant le même résultat. Le coulissement de la pièce 124 peut être amélioré grâce à des galets tels que 130.

La pièce 124 supporte de façon tournante l'extrémité supérieure du segment inférieur 20c du bras esclave, notamment par l'intermédiaire d'un palier 132. Le mouvement de rotation du cabestan 122 est transmis au segment 20c par un pignon conique 134 solidaire de la poulie et venant s'engrener sur une denture conique 136 formée à l'extrémité supérieure du segment 20c.

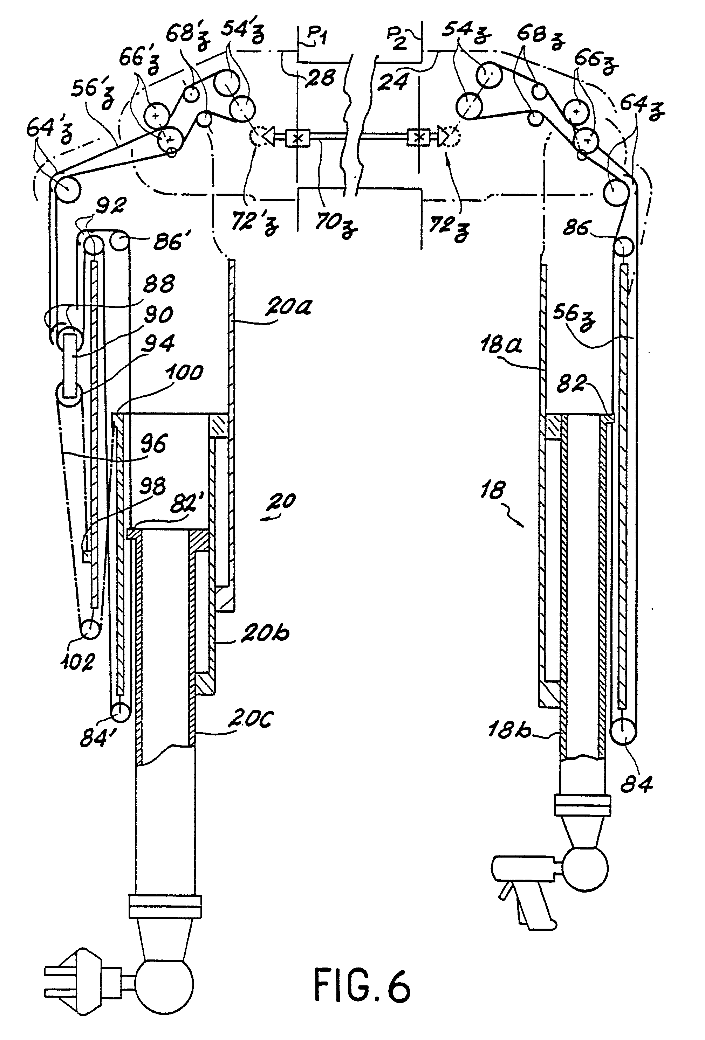

Accessoirement, on voit sur la figure 5 que c'est sur la pièce 124 que vient s'accrocher en 77' le câble antagoniste unique 74' des câbles 56'a, 56'b, 56'c et 56'd. C'est aussi sur cette pièce que vient s'accrocher le câble de commande 56'z du mouvement z qui sera décrit ultérieurement en se référant à la figure 6.

Les moyens d'entraînement 52a sont identiques aux moyens 52'a et ne seront donc pas décrits. On remarquera seulement que dans ce cas, la pièce coulissante est montée dans le segment supérieur 18a et supporte le segment inférieur 18b.

Comme pour les câbles 56b, 56c, 56d et 56'b, 56'c, 56'd, la tension des câbles 56a et 56'a est réalisée par les poulies 60a et 60'a portées par les chariots 62 et 62'.

De préférence, afin d'améliorer la qualité de la transmission des mouvements, les poulies 52b, c, d et 52'b, c, d sont remplacées par des roues dentées sur lesquelles viennent s'engrener des chaînes qui remplacent les parties des câbles 56b, c, d et 56'b, c, d aptes à coopérer avec ces roues dentées.

Afin de compléter la description du système de câblage du télémanipulateur selon l'invention, on décrira maintenant en se référant à la figure 6 les moyens permettant de transmettre au bras esclave un mouvement télescopique $Z_m$ du bras maître.

Du côté du bras maître 18, ces moyens de transmission comprennent un câble 56z qui est fixé en 82 (sur une pièce du type de la pièce 124 sur la figure 5) à l'extrémité supérieure du segment inférieur 18b du bras maître, de telle sorte qu'à tout mouvement de ce segment 18b correspondant à une variation de la longueur du bras maître corresponde un déplacement du câble 56z. Comme pour les moyens de transmission représentés sur les figures 3 et 4, le câble 56z est doublé, c'est-à-dire qu'il comprend deux parties dont les extrémités opposées au point de fixation 82 s'enroulent sur deux cabestans 54z logés dans la partie 24 du bloc de traversée.

Le cheminement et la tension du câble 56z sont assurés au moyen d'un certain nombre de poulies. Ainsi, à partir du point de fixation 82, une partie du câble 56z descend entre les deux segments pour s'enrouler autour d'une poulie 84 et remonter à l'extérieur du segment 18a vers l'un des cabestans 54z, et l'autre partie du câble 56z remonte directement à l'intérieur du segment 18a vers l'autre cabestan 54z. La poulie 84, montée à l'extrémité inférieure du segment 18a, assure également la tension du câble 56z. De la même façon que pour les câbles 56a, b, c, d décrits précédemment en se référant aux figures 2 à 4, chacune des deux parties du câble 56z passe au-dessus d'une poulie 64z, puis en dessous d'une poulie 66z à l'extrémité supérieure du bras maître. Chacune des parties du câble passe ensuite au-dessus d'une poulie de renvoi 68z, avant de s'enrouler sur le cabestan correspondant 54z. Bien entendu, des poulies complémentaires telles que 86 peuvent être prévues notamment à proximité de l'extrémité supérieure du segment 18a, pour assurer un cheminement correct de la partie du câble 56z passant à l'intérieur de ce segment.

Comme pour les moyens de transmission décrits précédemment, la traversée de la cloison 12 de l'enceinte étanche est réalisée au moyen d'un arbre horizontal tournant 70z dont la rotation est commandée par l'un des cabestans 54z, par l'intermédiaire de pignons à renvoi d'angle 72z. De façon symétrique, d'autres pignons à renvoi d'angle 72'z placés dans la partie esclave 28 du bloc de traversée, transmettent ce mouvement de rotation à un cabestan 54'z sur lequel s'enroule une extrémité d'un câble 56'z.

Comme du côté maître, l'autre extrémité du câble 56'z s'enroule sur un second cabestan 54'z disposé à proximité du premier dans la partie 28 du bloc de traversée. D'une façon parfaitement symétrique par rapport au bras maître, la transmission au segment inférieur 20c du bras esclave de la rotation du cabestan moteur 54'z est obtenue en solidarisant en 82' le câble 56'z à l'extrémité supérieure de ce segment 20c. Le guidage et la tension du câble 56'z sont réalisés à l'aide de moyens en grande partie symétriques à ceux qui ont été décrits précédemment pour le bras maître. Ainsi, on trouve à l'extrémité inférieure du segment intermédiaire 20b une poulie 84' sur laquelle s'enroule une première partie du câble 56'z à partir de son point de fixation 82' au segment 20c. Cette partie du câble 56'z remonte ensuite vers un premier des cabestans 54'z, alors que l'autre partie remonte directement vers l'autre cabestan à partir du point de fixation 82' au segment intermédiaire 20b. Les deux parties du câble 56'z passent également à l'extrémité supérieure du bras esclave 20 au-dessus de poulies 64'z, puis en dessous de poulies 66'z, pour s'enrouler enfin dans la partie 28 du bloc de traversée sur les cabestans 54'z, après être passés au-dessus de poulies de renvoi 68'z. On retrouve également à la partie supérieure du segment supérieur 20a des poulies 86' et 92 assurant le guidage des parties du câble commandant le déplacement du segment inférieur 20c.

En outre, des moyens doivent être prévus pour compenser les variations de longueur du bras esclave 20 résultant d'une commande de décalage électrique $Z_e$ de ce bras par rapport au bras maître. En d'autres termes, il est nécessaire que le câble 56'z reste parfaitement tendu et que son enroulement sur les cabestans 54'z ne soit pas modifié lorsqu'un décalage électrique en Z est réalisé.

A cet effet, et comme le montre la figure 6, chacune des parties du câble 56'z remontant vers l'extrémité supérieure du bras esclave s'enroule sur une poulie 88 portée par un chariot mobile 90 et assurant également la tension, avant de passer sur la poulie 64'z. De façon plus précise, chacune des parties du câble 56'z passe sur les poulies de guidage 86' et 92 à l'extrémité supérieure du segment 20a, redescend à l'extérieur de ce segment jusqu'à la poulie 88 correspondante, et remonte ensuite jusqu'à la poulie 64'z.

Le chariot 90 est monté à l'extérieur du segment 20a du bras esclave et il se déplace automatiquement dans le sens opposé et sur une distance $Z_e/2$ égale à la moitié de la distance $Z_e$ sur laquelle se déplacent les segments 20b et 20c du bras esclave, lorsqu'un décalage électrique est commandé. A cet effet, le chariot 90 porte à son extrémité inférieure une autre poulie 94 sur laquelle s'enroule un câble antagoniste 96 dont une extrémité est fixée en 98 à la partie inférieure du segment 20a et dont l'autre extrémité est fixée en 100 à la partie supérieure du segment 20b. Entre la poulie 94 et le point de fixation 100, le câble 96 passe sur une poulie de guidage 102 montée à l'extrémité inférieure du segment 20a du bras esclave.

Comme on le décrira plus en détail ultérieurement, on remarquera que les poulies 66z et 66'z sont disposées comme les poulies 66d, 66'd, 66a, b, c et 66'a, b, c, respectivement au-dessus de l'axe d'épaule 26 et au-dessus de l'axe d'épaule 30, de telle sorte que chacun des câbles 56z et 56'z passe à proximité immédiate de l'axe d'épaule correspondant.

On voit sur la figure 7 que les chariots 62' et 90 et les câbles qui leur correspondent sont normalement protégés par un carter 140.

On décrira maintenant en se référant à la figure 7 les moyens permettant de commander électriquement le décalage du bras esclave 20 par rapport au bras maître. Comme on l'a déjà indiqué notamment en se référant à la figure 6, ces moyens agissent sur le segment intermédiaire 20b et permettent donc de déplacer simultanément les segments 20b et 20c du bras esclave.

La commande de ce décalage est réalisée au moyen d'un motoréducteur 104 monté sur la partie 24 du bloc de traversée et commandant, par l'intermédiaire d'une transmission du type chaîne-roue dentée 106, la rotation d'un autre arbre horizontal tournant $70_{ze}$ traversant de part en part la partie centrale 22 du bloc de traversée. L'autre extrémité de l'arbre $70_{ze}$, placée dans la partie 28 du bloc de traversée, commande par l'intermédiaire de pignons à retour d'angle 108, la rotation d'une roue dentée 110 disposée coaxialement à l'axe d'épaule 30 du bras esclave. La rotation de la roue dentée 110 est transmise par un arbre incliné 112 à une tige filetée 116 disposée à l'intérieur du bras esclave, parallèlement à l'axe de celui-ci et immobilisé en translation par rapport à la partie supérieure 20a. La transmission à la tige filetée 116 de la rotation de la roue dentée 110 peut également se faire directement sans l'arbre 112. La tige filetée 116 se prolonge vers le bas et coopère avec un taraudage 118 formé dans la partie intermédiaire 20b du bras esclave, de telle sorte que sa rotation commande un coulissement des parties 20b et 20c du bras esclave à l'intérieur de la partie 20a.

Les autres moyens permettant de commander les décalages en X et en Y du bras esclave par rapport au bras maître sont bien connus et n'ont pas d'incidence sur la présente invention, de sorte qu'ils ne seront pas décrits ici.

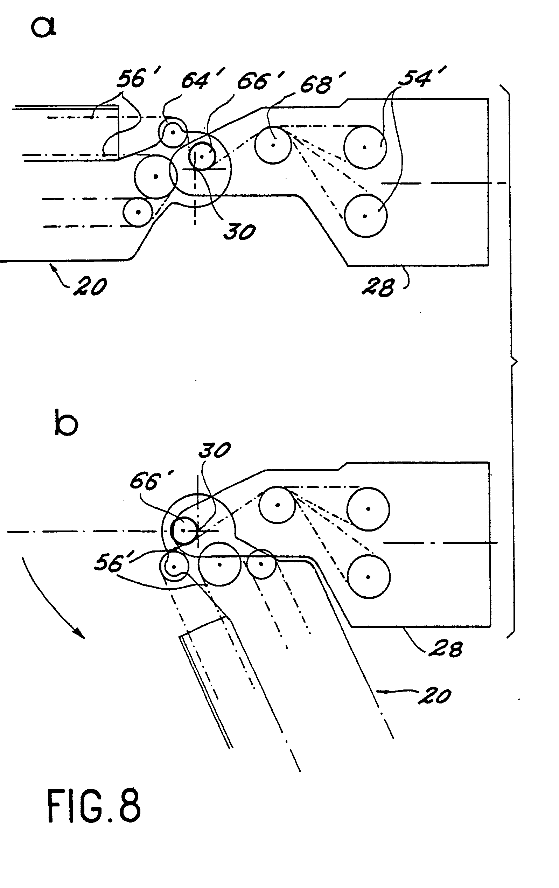

Pour compléter la description des câblages faite en se référant aux figures 2 à 6, on se référera maintenant aux figures 8a et 8b qui représentent l'articulation d'épaule du bras esclave dans deux positions extrêmes de ce bras. On reconnaît notamment sur ces figures les poulies 66' en-dessous desquelles passent tous les câbles de commande 56' du bras esclave. On voit que la disposition des poulies 66' au-dessus de l'axe d'épaule 30 est telle que chacun des câbles 56' passe auprès de cet axe, quelle que soit la position du bras. De plus, cette disposition permet, comme l'illustre notamment la figure 8b, de replier le bras selon la direction Y d'un angle accru par rapport aux systèmes de la technique antérieure. De façon comparable, la disposition des poulies 66' au-dessus de l'axe d'épaule permet d'utiliser des segments 20a à 20c de plus grande longueur. On améliore ainsi le rapport entre la longueur du bras étendu et celle du bras rétracté.

Enfin, une disposition comparable à celle du côté esclave étant réalisée du côté maître, la variation de longueur du câblage au cours d'un mouvement d'épaule Y se trouve automatiquement équilibrée.

### Revendications

1. Télémanipulateur télescopique comprenant un bloc de traversée (16) de cloison monté tournant autour de son axe propre, un bras maître télescopique (18) constitué d'un segment supérieur (18a) et d'un segment inférieur (18b) et un bras esclave télescopique (20) constitué d'un segment supérieur (20a), d'un segment intermédiaire (20b) et d'un segment inférieur (20c), ces bras étant articulés par leurs segments supérieurs sur le bloc de traversée autour de deux axes d'épaule (26, 30) orthogonaux à l'axe du bloc, une poignée de commande (34) comportant un organe de commande de serrage (36) et montée tournante à l'extrémité libre du bras maître selon trois mouvements d'orientation orthogonaux (A, B, C), un organe de préhension (40) comportant des moyens de serrage et monté tournant à l'extrémité libre du bras esclave selon trois mouvements d'orientation orthogonaux correspondant aux mouvements de la poignée (34), des premiers moyens de transmission mécaniques au bras esclave de mouvements de positionnement (X, Y, Z) impartis au bras maître, des deuxièmes moyens de transmission mécaniques à l'organe de préhension (40) des mouvements (A, B, C) d'orientation de la poignée (34) et d'un mouvement (D) de l'organe de commande de serrage, et des moyens de décalage du bras esclave par rapport au bras maître, permettant de modifier la longueur (Z) et l'orientation (X, Y) du bras esclave (20) autour de son axe d'épaule (30) et autour de l'axe du bloc de traversée (16) sans modifier les coordonnées correspondantes du bras maître (18), les deuxièmes moyens de transmission comprenant, pour chaque mouvement (A, B, C, D) transmis par ces deuxièmes moyens, au moins un premier câble ou ruban (56a, b, c, d) associé au bras maître pour transmettre le mouvement correspondant de la poignée de commande à un arbre tournant (70a, b, c, d) logé dans le bloc de traversée (16) et au moins un deuxième câble ou ruban (56'a, b, c, d) associé au bras esclave pour transmettre le mouvement correspondant de l'arbre tournant à l'organe de préhension (40), tous les deuxièmes câbles ou rubans (56'a, b, c, d) associés au bras esclave (20) passant d'abord sur des poulies (66'a, b, c, d) situées à proximité de l'axe d'épaule (30) du bras esclave (20), sur des poulies (60'a, b, c, d) portées par un chariot mobile unique (62') externe au bras esclave (20), puis sur des poulies (58'a, b, c, d) montées à l'extrémité supérieure du segment supérieur (20a) du bras esclave, des moyens (74') étant prévus pour commander un déplacement du chariot (62') le long du bras esclave lorsqu'une variation de longueur (Z) de ce dernier résultant d'un actionnement des moyens de décalage se produit, ce déplacement s'effectuant dans le sens opposé et sur une distance égale à la moitié de cette variation de longueur, caractérisé en ce que les deuxièmes câbles ou rubans (56'b, c, d) associés aux mouvements d'orientation B et C et de serrage D de l'organe de préhension (40) passent ensuite sur des poulies (52'b, c, d) de commande desdits mouvements (B, C, D) transmis par les deuxièmes moyens de transmission, ces dernières poulies étant montées à l'extrémité inférieure du segment inférieur (20c) du bras esclave (20), et en ce que lesdits moyens (74') pour commander le déplacement du chariot (62') le long du bras esclave assurent de plus ce déplacement lorsque la variation de longueur du bras esclave résulte d'un actionnement des premiers moyens de transmission, de sorte que le chariot unique (62') permet de compenser les variations de longueur des câbles ou rubans résultant des variations de longueur du bras esclave, aussi bien sous l'effet des moyens de décalage que sous l'effet des premiers moyens de transmission.

2. Télémanipulateur selon la revendication 1, caractérisé en ce que les deuxièmes câbles ou rubans (56'a) associés au mouvement d'orientation A de l'organe de préhension (40) passent ensuite sur un cabestan (122) de commande de ce mouvement A, ce cabestan étant monté sur une pièce (124) immobilisée en rotation à l'intérieur du segment intermédiaire (20b) du bras esclave, cette pièce (124) supportant de façon tournante l'extrémité supérieure du segment inférieur (20c) du bras esclave, un pignon (134) solidaire du cabestan (122) étant engréné dans une denture (136) formée à l'extrémité supérieure du segment inférieur (20c) du bras esclave.

3. Télémanipulateur selon l'une quelconque des revendications 1 et 2, caractérisé en ce que les moyens pour déplacer le chariot comprennent un câble ou ruban antagoniste (74') dont les extrémités sont fixées respectivement à l'extrémité inférieure du segment supérieur (20a) et à l'extrémité supérieure du segment inférieur (20c) du bras esclave et qui passe successivement sur des poulies (73', 76', 78', 80') montées respectivement sur le chariot (62'), à l'extrémité inférieure du segment supérieur (20a), à l'extrémité supérieure du segment intermédiaire (20b) et à l'extrémité inférieure du segment intermédiaire (20b).

4. Télémanipulateur selon l'une quelconque des revendications 1 à 3, caractérisé en ce que tous les premiers câbles ou rubans (56a, b, c, d) associés au bras maître passent sur des poulies portées par un deuxième chariot mobile unique (62) externe au bras maître, sur des poulies (58a, b, c, d) montées à l'extrémité supérieure du segment supérieur (18a) du bras maître, pour être commandés directement par la poignée de commande (34) ou par le segment inférieur (18b) du bras maître, et en ce que des moyens (74) sont prévus pour déplacer le deuxième chariot (62) le long du bras maître lorsqu'une variation de longueur de ce dernier se produit, dans le sens opposé et sur une distance égale à la moitié de cette variation de longueur.

5. Télémanipulateur selon la revendication 4, caractérisé en ce que les moyens pour déplacer le deuxième chariot comprennent un deuxième câble ou ruban antagoniste (74) dont les extrémités sont fixées respectivement à la partie inférieure du segment supérieur (18a) et à l'extrémité supérieure du segment inférieur (18b) du bras maître, et qui passe successivement sur des poulies (73, 76) montées respectivement sur le deuxième chariot (62) et à l'extrémité inférieure du segment supérieur (18a) du bras maître.

6. Télémanipulateur selon l'une quelconque des revendications 1 à 5, caractérisé en ce que les premiers moyens de transmission comprennent au moins un troisième câble ou ruban (56z) associé au bras maître pour transmettre le mouvement du segment inférieur du bras maître à un autre arbre tournant (70z) logé dans le bloc de traversée et au moins un quatrième câble ou ruban (56'z) associé au bras esclave pour transmettre le mouvement correspondant de cet arbre tournant au segment inférieur (20c) du bras esclave, ce quatrième câble ou ruban (56'z) passant sur au moins une poulie (88) portée par un troisième chariot mobile (90) externe au bras esclave, puis sur au moins une poulie (86', 92) montée sur le bras esclave à proximité de son axe d'épaule, pour commander directement le déplacement du segment inférieur (20c) par rapport aux autres segments du bras esclave, des moyens (96) étant prévus pour déplacer le troisième chariot (90) le long du bras esclave lorsqu'une variation de longueur de ce dernier se produit au travers des moyens de transmission, dans le sens opposé et sur une distance égale à la moitié de cette variation de longueur.

7. Télémanipulateur selon la revendication 6, caractérisé en ce que les moyens pour déplacer le troisième chariot (90) comprennent un troisième câble ou ruban antagoniste (96) dont les extrémités sont fixées respectivement à la partie inférieure du segment supérieur (20a) et à l'extrémité supérieure du segment intermédiaire (20b) du bras esclave, et qui passe successivement sur une poulie (94) portée par le troisième chariot (90) et sur une poulie (102) portée par l'extrémité inférieure du segment supérieur (20a) du bras esclave.

8. Télémanipulateur selon l'une quelconque des revendications 1 à 7, caractérisé en ce que les premiers et deuxièmes câbles ou rubans (56a, 56'a) servant à transmettre à l'organe de préhension (40) un mouvement de pivotement de la poignée de commande (34) autour de l'axe du bras maître (18) coopèrent respectivement avec des moyens d'entraînement (52a, 52'a) situés à l'extrémité supérieure du segment inférieur (18b, 20c) du bras correspondant, de telle sorte que le segment inférieur du bras maître tourne avec la poignée de commande (34) autour de l'axe du bras maître et que le segment inférieur du bras esclave tourne avec l'organe de préhension (40) autour de l'axe du bras esclave.

9. Télémanipulateur selon l'une quelconque des revendications 1 à 8, caractérisé en ce que chacun des câbles ou rubans (56a, b, c, d, z ; 56'a, b, c, d, z), des premiers et deuxièmes moyens de transmission passe auprès de l'axe d'épaule (26, 30) du bras correspondant sur au moins une poulie (66a, b, c, d, z ; 66'a, b, c, d, z) portée par le segment supérieur (18a, 20a) de ce bras et située au-dessus de l'axe d'épaule, sur le bras esclave comme sur le bras maître.

**Claims**

1. Telescopic remote handling manipulator comprising a wall passage block (16) mounted in rotation around its own axis, a telescopic master arm (18) consisting of an upper segment (18a) and a lower segment (18b) and a telescopic slave arm (20) consisting of an upper segment (20a), an intermediate segment (20b) and a lower segment (20c), these arms being articulated by means of their upper segments onto the passage block around two shoulder axles (26, 30) at right angles to the axis of the block, a control handgrip (34) comprising a clamping control member (36) and mounted in rotation at the free end of the master arm according to three orienting motions at right angles (A, B, C), a prehensile member (40) comprising means of clamping and mounted in rotation at the free end of the slave arm according to three orienting motions at right angles corresponding to the motions of the handgrip (34), first mechanical means for transmitting to the slave arm the positioning motions (X, Y, Z) imparted to the master arm, second mechanical means for transmitting to the prehensile member (40) orienting motions (A, B, C) of the handgrip (34) and a motion (D) of the clamping control member, and means for offsetting the slave arm in relation to the master arm, making it possible to change the length (Z) and the orientation (X, Y) of the slave arm (20) around its shoulder axle (30) and around the axis of the passage block (16) without changing the corresponding coordinates of the master arm (18), second means of transmission comprising, for each motion (A, B, C, D) transmitted by these second means, at least one first cable or strip (56a, b, c, d) associated with the master arm for transmitting the corresponding motion of the control hand grip to a rotary shaft (70a, b, c, d) housed in the passage block (16) and at least one second cable or strip (56'a, b, c, d) associated with the slave arm for transmitting the corresponding motion of the rotary shaft to the prehensile member (40), all the second cables or strips (56'a, b, c, d) associated with the slave arm (20) passing first over pulleys (66'a, b, c, d) situated close to the shoulder axle (30) of the slave arm (20), over pulleys (60'a, b, c, d) carried by a single movable trolley (62') external to the slave arm (20), then over pulleys (58'a, b, c, d) mounted at the upper end of the upper segment (20a) of the slave arm, means (74') being provided for controlling a travel of the trolley (62') along the slave arm when a change in the length (Z) of the latter takes place, resulting from an actuation of the offsetting means, this travel taking place in the opposite direction and over a distance equal to one half of this change in length, characterized in that the second cables or strips (56'b, c, d) associated with the orienting motions B and C and the clamping motion D of the prehensile member (40) then pass over pulleys (52'b, c, d) for controlling the said motions (B, C, D) transmitted by the second means of transmission, these last pulleys being mounted at the lower end of the lower segment (20c) of the slave arm (20), and in that the said means (74') for controlling the travel of the trolley (62') along the slave arm additionally ensure this travel when the change in the length of the slave arm results from an actuation of the first means of transmission, so that the single trolley (62') makes it possible to compensate the changes in the length of the cables or strips resulting from the changes in the length of the slave arm, both under the effect of the offsetting means and under the effect of the first means of transmission.

2. Remote handling manipulator according to Claim 1, characterized in that the second cables or strips (56'a) associated with the orienting motion A of the prehensile member (40) then pass over a capstan (122) for controlling this motion A, this capstan being mounted on a component (124) which is immobilized in rotation inside the intermediate segment (20b) of the slave arm, this component (124) supporting rotationally the upper end of the lower segment (20c) of the slave arm, a pinion (134) fastened integrally to the capstan (122) being meshed in a set of teeth (136) formed at the upper end of the lower segment (20c) of the slave arm.

3. Remote handling manipulator according to either of Claims 1 and 2, characterized in that the means for moving the trolley comprise an antagonistic cable or strip (74') whose ends are fastened, respectively, to the lower end of the upper segment (20a) and to the upper end of the lower segment (20c) of the slave arm and which passes in succession over pulleys (73', 76', 78', 80') mounted, respectively, on the trolley (62'), at the lower end of the upper segment (20a) at the upper end of the lower segment (20b) and at the lower end of the intermediate segment (20b).

4. Remote handling manipulator according to any one of Claims 1 to 3, characterized in that all the first cables or strips (56a, b, c, d) associated with the master arm pass over pulleys carried by a second single movable trolley (62) external to the master arm, over pulleys (58a, b, c, d) mounted at the upper end of the upper segment (18a) of the master arm, in order to be controlled directly by the control handgrip (34) or by the lower segment (18b) of the master arm, and in that means (74) are provided for moving the second trolley (62) along the master arm when a change in the length of the latter takes place, in the opposite direction and over a distance equal to one half of this change in length.

5. Remote handling manipulator according to Claim 4, characterized in that the means for moving the second trolley comprise a second antagonistic cable or strip (74) whose ends are fastened, respectively, to the lower part or the upper segment (18a) and to the upper end of the lower segment (18b) of the master arm, and which passes in succession over pulleys (73, 76) mounted, respectively, on the second trolley (62) and at the lower end of the upper segment (18a) of the master arm.

6. Remote handling manipulator according to any one of Claims 1 to 5, characterized in that the first means of transmission comprise at least a third cable or strip (56z) associated with the master arm for transmitting the motion of the lower segment of the master arm to another rotating shaft (70z) housed in the passage block and at least one fourth cable or strip (56'z) associated with the slave arm for transmitting the corresponding motion of this rotating shaft to the lower segment (20c) of the slave arm, this fourth cable or strip (56'z) passing over at least one pulley (88) carried by a third movable trolley (90) external to the slave arm, then over at least one pulley (86', 92) mounted on the slave arm close to its shoulder axle, in order to control directly the travel of the lower segment (20c) in relation to the other segments of the slave arm, means (96) being provided for moving the third trolley (90) along the slave arm when a change in the length of the latter takes place through the means of transmission, in the opposite direction and over a distance equal to one half of this change in length.

7. Remote handling manipulator according to Claim 6, characterized in that the means for moving the third trolley (90) comprise a third antagonistic cable or strip (96) whose ends are fastened, respectively, to the lower part of the upper segment (20a) and to the upper end of the intermediate segment (20b) of the slave arm, and which passes in succession over a pulley (94) carried by the third trolley (90) and over a pulley (102) carried by the lower end of the upper segment (20a) of the slave arm.

8. Remote handling manipulator according to any one of Claims 1 to 7, characterized in that the first and second cables or strips (56a, 56'a) used to transmit to the prehensile member (40) a pivoting motion of the control handgrip (34) around the axis of the master arm (18) interact, respectively, with driving means (52a, 52'a) situated at the upper end of the lower segment (18b, 20c) of the corresponding arm, so that the lower segment of the master arm rotates with the control handgrip (34) around the axis of the master arm and that the lower segment of the slave arm rotates with the prehensile member (40) around the axis of the slave arm.

9. Remote handling manipulator according to any one of Claims 1 to 8, characterized in that each of the cables or strips (56a, b, c, d, z ; 56'a, b, c, d, z) of the first and second means of transmission passes beside the shoulder axle (26, 30) of the corresponding arm over at least one pulley (66a, b, c, d, z ; 66'a, b, c, d, z) carried by the upper segment (18a, 20a) of this arm and situated above the shoulder axle, on the slave arm as well as on the master arm.

**Patentansprüche**

1. Teleskopischer fernbedienbarer Manipulator, enthaltend einen Wanddurchgangsblock (16), der um seine Eigenachse drehend montiert ist, einen teleskopischen Masterarm (18), der von einem oberen Segment (18a) und einem unteren Segment (18b) gebildet ist, und einen teleskopischen Slave-Arm (20), der von einem oberen Segment (20a), einem Zwischensegment (20b) und einem unteren Segment (20c) gebildet ist, wobei diese Arme durch ihre oberen Segmente an dem Durchgangsblock um zwei Schulterachsen (26, 30), die zur Achse des Blocks orthogonal verlaufen, schwenkbar gelagert sind, einen Steuergriff (34), der ein Greifsteuerorgan (36) trägt und am freien Ende des Masterarms in drei orthogonalen Bewegungsrichtungen (A, B, C) drehbar angebracht ist, ein Greiforgan (40), das Greifeinrichtungen enthält und am freien Ende des Slave-Arms in drei orthogonalen Bewegungsrichtungen entsprechend der Bewegungen des Griffs (34) drehbar angebracht ist, erste mechanische Übertragungseinrichtungen für die Übertragung von dem Masterarm vermittelten Stellbewegungen (X, Y, Z) auf den Slave-Arm, zweite mechanische Übertragungseinrichtungen für die Übertragung von Richtungsbewegungen (A, B, C) vom Griff (34) und einer Bewegung (D) des Greifsteuerorgans auf das Greiforgan (40), und Einrichtungen zur Verstellung des Slave-Arms gegenüber dem Masterarm, die es erlauben, die Länge (Z) und die Richtung (X, Y) des Slave-Arms (20) um seine Schulterachse (30) und um die Achse des Durchgangsblocks (16) zu verändern, ohne die entsprechenden Koordinaten des Masterarms (18) zu verstellen, wobei die zweiten Übertragungseinrichtungen für jede von den zweiten Einrichtungen übertragene Bewegung (A, B, C, D) wenigstens ein Kabel oder Band (56a, b, c, d) aufweisen, das dem Masterarm zugeordnet ist, um die entsprechende Bewegung des Steuergriffs auf eine Drehwelle (70a, b, c, d) zu übertragen, die in dem Durchgangsblock (16) angeordnet ist, und weiterhin wenigstens ein zweites Kabel oder Band (56'a, b, c, d) aufweist, das dem Slave-Arm zugeordnet ist, um die entsprechende Bewegung der drehenden Welle auf das Greiforgan (40) zu übertragen, wobei alle zweiten Kabel oder Bänder (56'a, b, c, d), die dem Slave-Arm (20) zugeordnet sind, zunächst über Rollen (66'a, b, c, d), die nahe der Schulterachse (30) des Slave-Arms (20) angeordnet sind, über Rollen (60'a, b, c, d), die von einem beweglichen, einzigen Schlitten (62') außerhalb des Slave-Arms (20) getragen werden, und dann über Rollen (58'a, b, c, d) laufen, die am oberen Ende des oberen Segments (20a) des Slave-Arms montiert sind, wobei Einrichtungen (74') vorgesehen sind, um die Verstellung des Schlittens (62') längs des Slave-Arms zu steuern, wenn eine Änderung der Länge (Z) des letzteren, die zu einer Betätigung der Verstelleinrichtung führt, sich zeigt, wobei diese Verstellung sich in entgegengesetztem Sinne und über eine Distanz vollzieht, die gleich der Hälfte dieser Längenänderung ist, dadurch gekennzeichnet, daß die zweiten Kabel oder Bänder (56'b, c, d), die den Bewegungsrichtungen B und C und dem Greifen D des Greiforgans (40) zugeordnet sind, anschließend über Rollen (52'b, c, d) zur Steuerung dieser Bewegungen (B, C, D) laufen, die über die zweiten Übertragungseinrichtungen übertragen werden, wobei letztere Rollen am unteren Ende des unteren Segments (20c) des Slave-Arms (20) montiert sind, und daß die Einrichtungen (74') zum Steuern der Verstellung des Schlittens (62') längs des Slave-Arms darüber hinaus diese Verstellung sicherstellen, wenn die Veränderung der Länge des Slave-Arms zu einer Betätigung der ersten Übertragungseinrichtungen führt derart, daß der einzige Schlitten (62') die Kompensation der Längenänderungen der Kabel oder Bänder erlaubt, die aus den Längenänderungen des Slave-Arms sowie aus der Wirkung der Verstelleinrichtung sowie aus der Wirkung der ersten Übertragungseinrichtung resultieren.

2. Fernbedienbarer Manipulator nach Anspruch 1, dadurch gekennzeichnet, daß die zweiten Kabel oder Bänder (56'a), die der Bewegungsrichtung A des Greiforgans (40) zugeordnet sind, anschließend über eine Treibrolle (122) für die Steuerung der Bewegung A laufen, wobei diese Treibrolle an einem gegen Verdrehung gesicherten Bauteil (124) im Innern des Zwischensegments (20b) des Slave-Arms montiert ist, dieses Bauteil (124) das obere Ende des unteren Segments (20c) des Slave-Arms drehbar lagert und ein mit der Treibrolle (122) drehfest verbundenes Zahnrad (134) in einer Zahnung (136) kämmt, die am oberen Ende des unteren Segments (20c) des Slave-Arms ausgebildet ist.

3. Fernbedienbarer Manipulator nach einem der Ansprüche 1 und 2, dadurch gekennzeichnet, daß die Einrichtungen zum Verstellen des Schlittens ein gegenwirkendes Kabel oder Band (74') enthalten, dessen Enden am unteren Ende des oberen Segments (20a) bzw. am oberen Ende des unteren Segments (20c) des Slave-Arms befestigt sind und das nacheinander über Rollen (73', 76', 78', 80') läuft, die am Schlitten (62'), am unteren Ende des oberen Segments (20a), am oberen Ende des Zwischensegments (20b) bzw. am unteren Ende des Zwischensegments (20b) gelagert sind.

4. Fernbedienbarer Manipulator nach einem der Ansprüche 1 bis 3, dadurch gekennzeichnet, daß alle ersten Kabel oder Bänder (56a, b, c, d), die dem Masterarm zugeordnet sind, über Rollen laufen, die von einem zweiten beweglichen einzigen Schlitten (62) außerhalb des Masterarms gelagert sind, über Rollen (58a, b, c, d) laufen, die am oberen Ende des oberen Segments (18a) des Masterarms gelagert sind, um direkt von dem Steuergriff (34) oder von dem unteren Segment (18b) des Masterarms gesteuert zu werden, und daß Einrichtungen (74) vorgesehen sind, um den zweiten Schlitten (62) längs des Masterarms bei einer Längenänderung des letzteren in entgegengesetztem Sinne und über eine der Hälfte dieser Längenänderung entsprechende Distanz zu verschieben.

5. Fernbedienbarer Manipulator nach Anspruch 4, dadurch gekennzeichnet, daß die Einrichtungen zum Verschieben des zweiten Schlittens ein zweites gegenwirkendes Kabel oder Band (74) enthalten, dessen Enden am unteren Abschnitt des oberen Segments (18a) bzw. am oberen Ende des unteren Segments (18b) des Masterarms befestigt sind und das nacheinander über Rollen (73, 76) läuft, die am zweiten Schlitten (62) bzw. am unteren Ende des oberen Segments (18a) des Masterarms gelagert sind.

6. Fernbedienbarer Manipulator nach einem der Ansprüche 1 bis 5, dadurch gekennzeichnet, daß die ersten Übertragungseinrichtungen wenigstens ein drittes Kabel oder Band (56z) enthalten, das dem Masterarm zugeordnet ist, um die Bewegung des unteren Segments des Masterarms auf einen weiteren Dreharm (70z) zu übertragen, der in dem Durchgangsblock angeordnet ist, und weiterhin wenigstens ein viertes Kabel oder Band (56'z) enthalten, das dem Slave-Arm zugeordnet ist, um die entsprechende Bewegung dieses Dreharms auf das untere Segment (20c) des Slave-Arms zu übertragen, wobei dieses vierte Kabel oder Band (56'z) über wenigstens eine Rolle (88) läuft, die von einem dritten beweglichen Schlitten (90) außerhalb des Slave-Arms gelagert wird, sodann über wenigstens eine Rolle (86', 92), die am Slave-Arm nahe seiner Schulterachse gelagert ist, um direkt die Verstellung des unteren Segments (20c) gegenüber den anderen Segmenten des Slave-Arms zu steuern, wobei Einrichtungen (96) vorgesehen sind, um den dritten Schlitten (90) längs des Slave-Arms zu verschieben, wenn sich eine Längenänderung des letzteren quer zu den Übertragungseinrichtungen zeigt, und zwar im entgegengesetzten Sinn und über eine Distanz, die gleich die Hälfte dieser Längenänderung ist.

7. Fernbedienbarer Manipulator nach Anspruch 6, dadurch gekennzeichnet, daß die Einrichtungen zum Verschieben des dritten Schlittens (90) ein drittes gegenwirkendes Kabel oder Band (96) enthalten, dessen Enden am unteren Abschnitt des oberen Segments (20a) bzw. am oberen Ende des Zwischensegments (20b) des Slave-Arms befestigt sind und das nacheinander über eine Rolle (94), die von dem dritten Schlitten (90) gelagert wird, und über eine Rolle (102), die vom unteren Ende des oberen Segments (20a) des Slave-Arms gelagert wird, läuft.

8. Fernbedienbarer Manipulator nach einem der Ansprüche 1 bis 7, dadurch gekennzeichnet, daß die ersten und zweiten Kabel oder Bänder (56a, 56'a), die dazu dienen, auf das Greiforgan (40) eine Schwenkbewegung des Steuergriffs (34) um die Achse des Masterarms (18) zu übertragen, jeweils mit Mitnehmereinrichtungen (52a, 52'a) zusammenwirken, die am oberen Ende des unteren Segments (18b, 20c) des jeweiligen Arms angebracht sind derart, daß das untere Segment des Masterarms mit dem Steuergriff (34) um die Achse des Masterarms dreht und das untere Segment des Slave-Arms mit dem Greiforgan (40) um die Achse des Slave-Arms dreht.

9. Fernbedienbarer Manipulator nach einem der Ansprüche 1 bis 8, dadurch gekennzeichnet, daß jedes der Kabel oder Bänder (56a, b, c, d, z ; 56'a, b, c, d, z) der ersten und zweiten Übertragungseinrichtungen nahe der Schulterachse (26, 30) des jeweiligen Armes über wenigstens eine Rolle (66a, b, c, d, z ; 66'a, b, c, d, z) läuft, das von dem oberen Segment (18a, 20a) dieses Armes gelagert wird und oberhalb der Schulterachse gelegen ist, und zwar am Slave-Arm wie auch am Masterarm.

FIG.1

FIG.2

FIG. 3

FIG.4

0 085 609

FIG.5

FIG.6

FIG.7

a

56'  64'  66'  68'  54'

30

20          28

b

30

66'

56'

28

20

FIG.8